# EUROPEAN PATENT SPECIFICATION

(11) **EP 4 350 194 B1**
(45) Date of publication and mention of the grant of the patent: **24.06.2026**
(21) Application number: 23200712.0
(22) Date of filing: 29.09.2023
(51) Int. Cl.: F16M 13/00, H04M 1/04, F16M 13/02, F16M 11/04, F16M 11/08

(54) **SUPPORTING DEVICE FOR A PORTABLE PROCESSING AND/OR TELECOMMUNICATION APPARATUS OR AN ACCESSORY**
TRAGVORRICHTUNG FÜR EIN TRAGBARES BEARBEITUNGS- UND/ODER TELEKOMMUNIKATIONSGERÄT ODER EIN ZUBEHÖRTEIL
DISPOSITIF DE SUPPORT POUR UN APPAREIL DE TRAITEMENT ET/OU DE TÉLÉCOMMUNICATION PORTABLE OU UN ACCESSOIRE

(30) Priority: 04.10.2022 IT 202200020328
(43) Date of publication of application: 10.04.2024
(73) Proprietor: Ferraris Group SAGL, 6830 Chiasso (CH)
(72) Inventor: FERRARIS, Carlo Edoardo, 6830 CHIASSO (CH); FERRARIS, Lorenzo Filiberto, I-21020 CASCIAGO (Varese) (IT)
(74) Representative: Deambrogi, Edgardo

(56) References cited:
- AU-A4- 2021 102 895
- US-B2- 10 066 784

## Description

The present invention relates to stands, and in particular to a supporting device for a portable processing and/or telecommunication apparatus or an accessory, preferably but not limited for the coupling of a portable processing and/or telecommunication apparatus or an accessory to a supporting structure.

More specifically, the invention relates to a supporting device according to the preamble of claim 1.

Such a supporting device is, for example, employed for arranging a portable processing and/or telecommunication apparatus, such as a smartphone or a tablet, side by side with a display screen of a computer, such as a monitor or laptop screen. Advantageously, it may also be used to arrange an accessory, such as a mobile phone charger or light, side by side with the display screen of a computer. Without any change to its structure, and within the general idea of the definition given above, such a supporting device may also be associated with a smartphone or tablet to pair with another smartphone (or tablet) or an accessory.

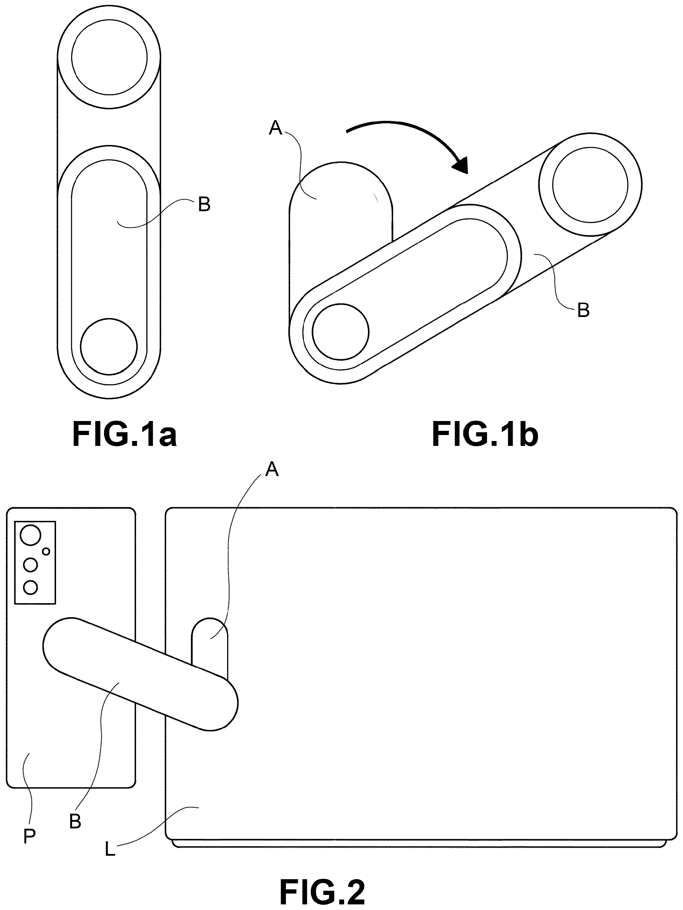

In Fig. 1, a supporting device is shown according to the prior art, marketed by the company Rolling Square under the name Edge. It comprises a first and a second flat portion A, B joined together in a pivotable manner by means of a pin that allows the rotation of one portion with respect to the other in parallel planes. One of the two portions (portion A in the figure) is arranged to be stably coupled by adhesive to a supporting structure, such as the display screen of a computer, or rather to the shell bearing said screen, at the rear thereof, while the other portion (portion B in the figure) bears magnetic means for retaining a portable processing and/or telecommunication apparatus, such as a smartphone, or an accessory, having a shell, a part thereof, an insert, or an adhering element made of metal.

In Fig. 1a, a configuration of minimum size of the supporting device is shown, wherein the two portions are superimposed in a facing condition, and, in Fig. 1b, a configuration of use may be selected with respect to the portion intended to be stably coupled to a supporting structure. In this configuration, as shown in Fig. 2, the portion A of the supporting device is coupled at the rear of the display screen of a laptop L (but may likewise be a monitor), in proximity to the edge, and the portion B is rotated by an angle sufficient to protrude outside the profile of the display screen in order to support a smartphone P in a position side by side with the screen. Naturally, although the figure shows a condition wherein the smartphone is coupled laterally to the screen, an appropriate placement of the supporting device would allow the smartphone to be coupled at the top of the screen.

Disadvantageously, such a supporting device in accordance with the prior art does not allow for extensive adjustment of the orientation of a portable processing and/or telecommunication apparatus or an accessory with respect to the display screen with which it is associated, but on the contrary is constrained to the inclination of the rear surface of the screen with respect to the lying surface of said screen.

Moreover, it proves to be unsuitable, if not completely ineffective, in the case of supporting structures other than a display screen.

US10066784B2 discloses a folding handheld device holding system comprises a connecting arm with a connection section which includes an adhesive, and an extension arm connected to the connecting arm by a hinge having a hinge pin, where the extension arm includes a holding section having a recess therein that receives a cover and at least one magnet therein. In one arrangement, the at least one magnet consists of a plurality of magnets.

The object of this invention is to provide a satisfactory solution to the problems described above, avoiding the drawbacks of the prior art.

In particular, the object of the invention is to provide a supporting device for a portable processing and/or telecommunication apparatus that allows optimal visibility of the apparatus for a user, i.e., that allows a portable processing and/or telecommunication apparatus or an accessory to be adjusted to an optimal position with respect to the display screen of a computer (e.g., a laptop or tablet) and, more generally, to the environment, and that is adaptable to a wide variety of supporting structures.

According to this invention, this object is achieved by a supporting device having the features set out in claim 1.

Particular embodiments form the subject matter of the dependent claims, the content of which is to be understood as an integral part of the present description.

In summary, the present invention is based on the principle of constructing a supporting device having a structure that allows for an adjustable arrangement of the supported apparatus or accessory, for example an adjustable inclination with respect to a supporting structure to which the device may be coupled. The invention also relates to the provision of magnetic coupling means that enable ease of use and maneuverability of the device, as well as its adaptability to different types of portable processing and/or telecommunication apparatuses or accessories.

Portable processing and/or telecommunication apparatuses that may be applied to the device include smartphones and tablets. Accessories that may be applied to the device include lamps or wireless charging bases for electronic devices.

Advantageously, a device made according to the invention is easily adaptable to different types of support structures and may be coupled to them even temporarily. It may also be combined with other similar (identical) supporting devices to create complex support structures. Moreover, the structure of the device is such that a pair of supporting devices may be used together to extend the range of portable processing and/or telecommunication apparatuses or accessories, ensuring coupling stability at all times. Supporting structures to which the device may be applied (or arranged to be supported thereby) include, to name a few non-limiting examples, laptop screens, monitors, tablets, smartphones, walls, furniture elements or other similar supporting devices.

Even more advantageously, the structure of the device allows for the support of apparatuses or accessories in multiple orientations with respect to said device, on both faces of the device and simultaneously on both hinged portions of the device.

Further features and advantages of the invention will be presented in greater detail in the following detailed description of an embodiment thereof, given by way of non-limiting example, with reference to the accompanying drawings, wherein:
Fig. 1a, 1b and 2 are views of a supporting device according to the prior art and of its use in association with a display screen of a computer, discussed above;
Fig. 3a and 3b are perspective and lateral elevation views, respectively, of the supporting device that is the subject of the invention in a configuration of use;
Fig. 4a-4c are views from different angles of the device that is the subject of the invention in a minimum size or closed configuration, and Fig. 4d shows the intervention of a user to bring the device into the configuration of use;
Fig. 5 is an exploded perspective view of the supporting device that is the subject of the invention, showing its main components;
Fig. 6 is a cross-sectional front view of the supporting device that is the subject of the invention, showing its arrangement of magnetic elements;
Fig. 7 is a perspective view of an element of the device that is the subject of the invention intended for attachment to a supporting structure;
Fig. 8a-8d show sequentially the application of a device that is the subject of the invention to a computer display screen and the coupling of a portable telecommunication apparatus thereto;
Fig. 9a-9d show further ways of using the device that is the subject of the invention; and

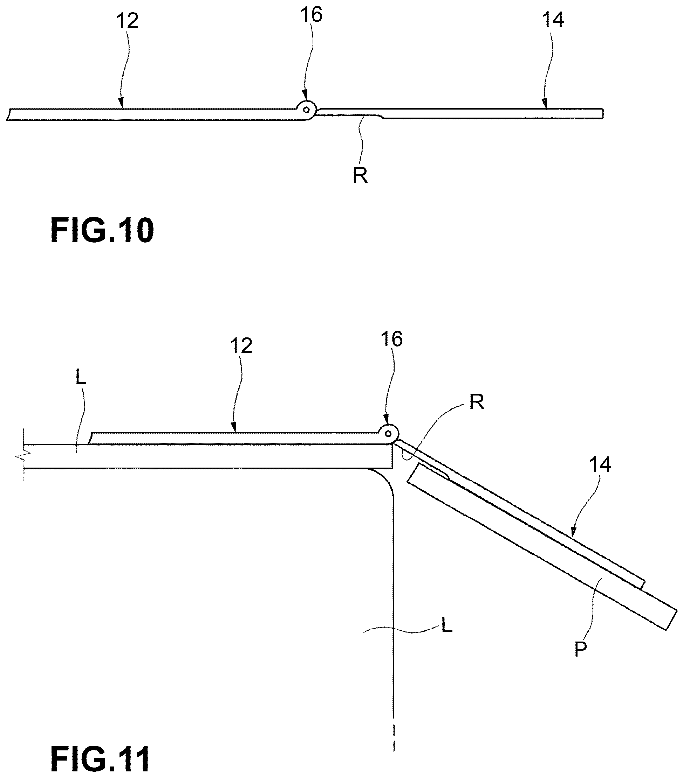

Fig. 10 and 11 show a feature of the device that is the subject of the invention.

In the figures, identical or functionally equivalent elements or components have been given the same reference numbers.

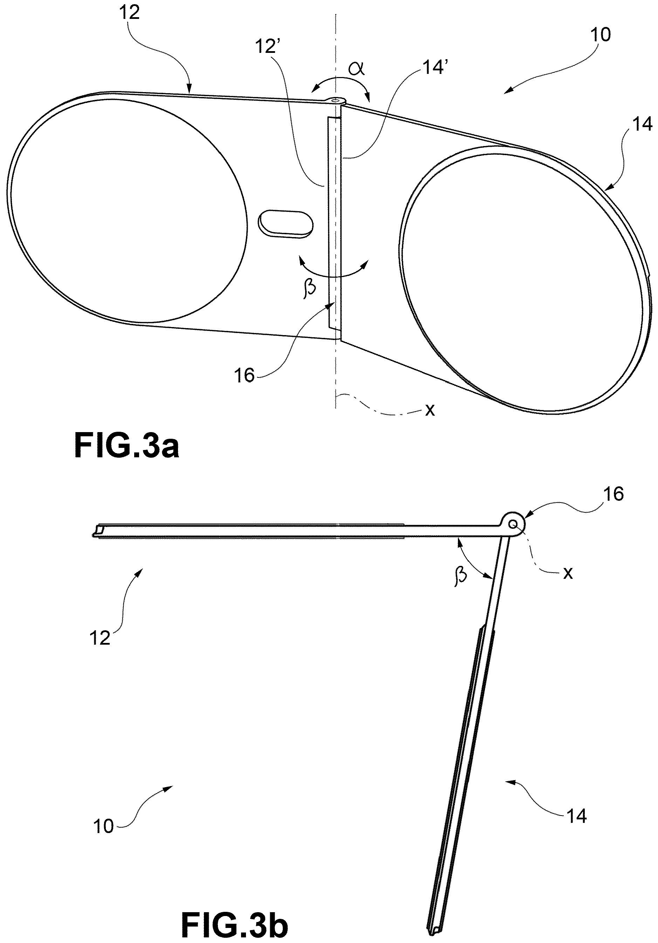

A supporting device according to the invention for a portable processing and/or telecommunication apparatus or accessory is shown with its general features in Fig. 3a and 3b and denoted as a whole by 10.

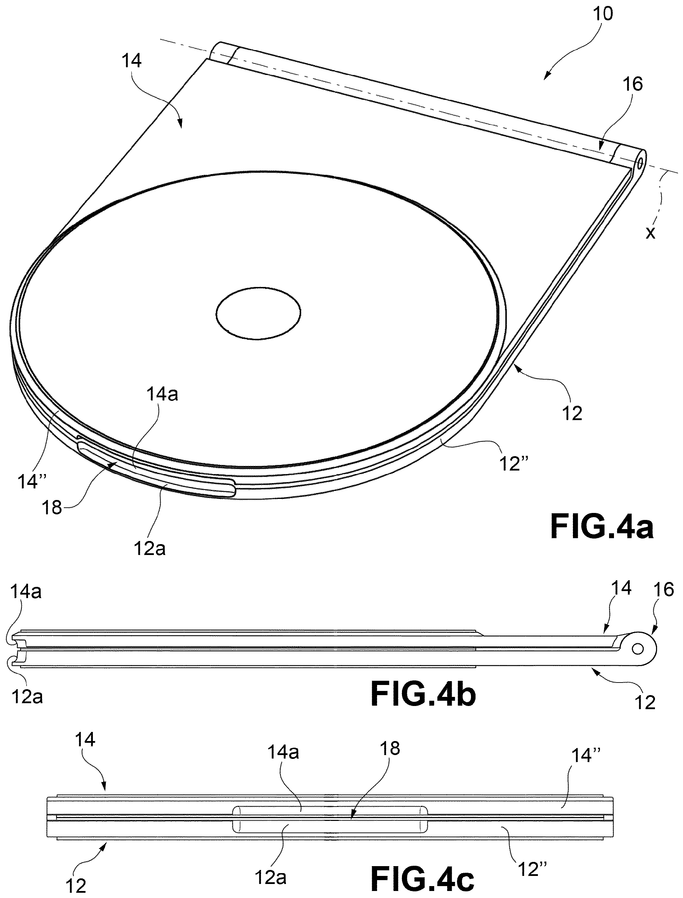

The device comprises a first portion 12 adapted to be supported by a supporting structure, e.g., adapted to be coupled to a supporting structure (not shown here), and a second portion 14 adapted to retain an apparatus or accessory (not shown here). The first and the second portion 12, 14 are made as plate elements and joined together in a pivotable manner through hinge means 16 which allow the rotation of one portion with respect to the other around a hinge axis X. In particular, the portions 12, 14 are hinged along portions of a relevant edge 12', 14' that are mutually parallel and parallel to the hinge axis so that the device is configured to open like a book from the configuration of minimum size in which the portions 12 and 14 are superimposed and facing each other (shown in Fig. 4a-4d) to a selected configuration of use, for example the configuration shown in Fig. 3a, 3b, wherein the portion 14 is rotated by a selectable angle α with respect to the portion 12 so as to form an inner angle β between the two portions. Operationally, the rotation of the portion 14 with respect to the portion 12 may be by an angle less than, equal to, or greater than 180°.

Advantageously, the first and the second portion 12, 14 have congruent shapes so that when the device is closed in the configuration of minimum size neither of said portions protrudes from the profile of the other. The first and the second portion may be interchangeable in one embodiment of the device.

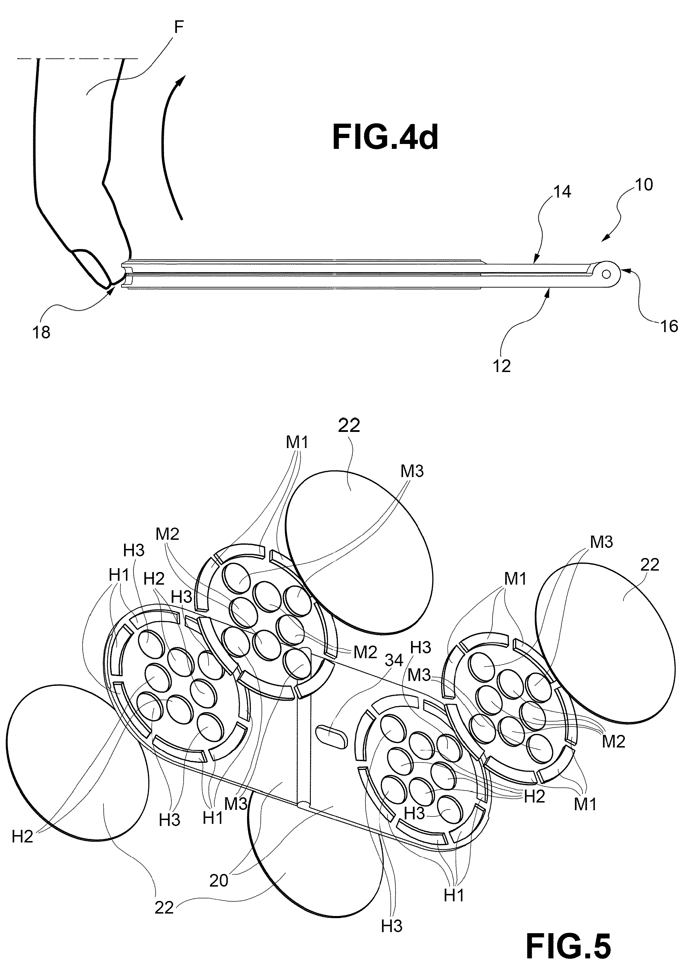

With reference to Fig. 4a-4d, segments of the edge 12", 14" of both portions 12, 14, located on the opposite side to the hinge, have corresponding notches 12a, 14a intended to be facing each other in the configuration of minimum size of the device so as to form a recess 18 in one lateral face of the device. This recess is adapted to facilitate the engagement of a finger F of a user, as shown schematically in Fig. 4d, to be able to separate the portions 12, 14 and open the device 10 in a configuration of use.

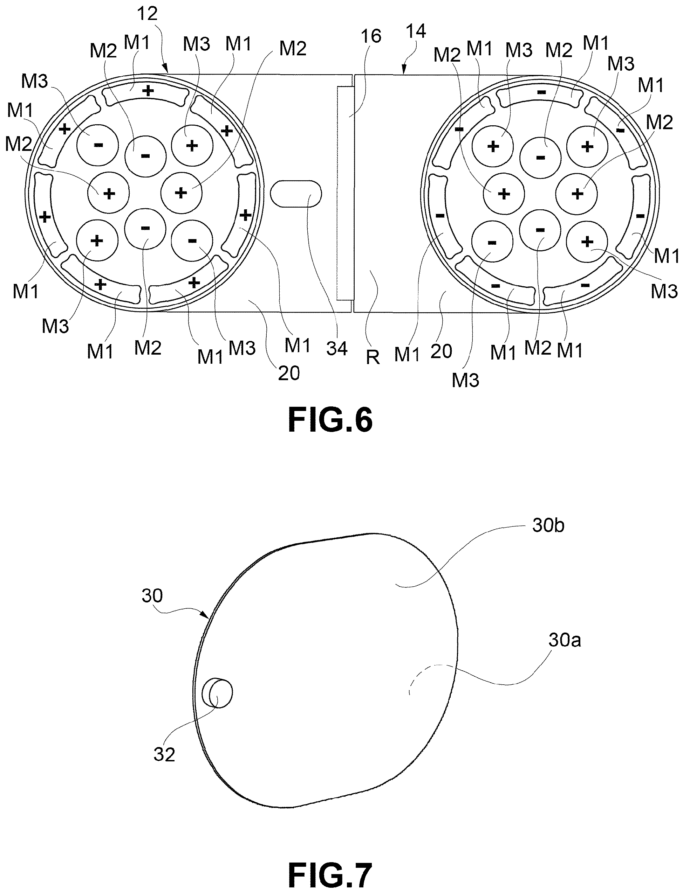

The main components constituting the supporting device are shown in Fig. 5 and 6 and described below with reference to these figures.

The first portion 12 and the second portion 14 each comprise a rigid main body 20, for example, a milled aluminum metal main body, bearing a plurality of housings, preferably in the form of through-holes (denoted as H1, H2, and H3 in the figure, the significance of this distinction appearing clear in the discussion hereinafter) adapted to receive respective magnetic elements (denoted as M1, M2, and M3 in the figure, the significance of this distinction appearing clear in the discussion hereinafter), for example magnets with magnetization N52. The hinge means may, for example, be constructed of steel. The first portion 12 and the second portion 14 further comprise a pair of covering elements 22 applied on opposite faces of the main body 20 at the magnetic elements, i.e., the area arranged to receive in contact and magnetically retain an apparatus or accessory, which covering elements are adapted to cover on both faces the housings engaged by the magnetic elements and do not interfere with the magnetic field generated by the magnetic elements. Each covering element 22 comprises a first layer of rigid material facing toward the main body 20 of the relevant plate element and adapted to adhere firmly thereto, and a second layer of soft material facing externally to the body 20 in the case of the portion 14 adapted to receive in contact said portable processing and/or telecommunication apparatus or accessory and to limit its sliding.

Advantageously, the first and the second portion 12, 14 of the device include, respectively, a first and a second plurality of magnetic elements of equal number, symmetrically arranged with respect to the hinge axis X so that symmetrically corresponding magnetic elements of the first and the second portion are arranged facing each other in a configuration of minimum size of the device. In a currently preferred embodiment, symmetrically corresponding magnetic elements are also congruent with each other.

Specifically, each portion 12, 14 of the device includes a first set of magnetic elements M1 arranged circumferentially and a second set of magnetic elements arranged in a checkerboard or quincunx pattern within a region defined by the circumferential arrangement of the first set of magnetic elements M1. The first set of magnetic elements is arranged according to an arrangement compatible with Apple's Magsafe technology. Advantageously, an accessory metal ring adapted to adhere to the shell of an apparatus or accessory to be supported, for example an apparatus or accessory with no metal parts, may be provided with the supporting device. The second set of magnetic elements includes a first sub-set of magnetic elements M2 for supporting apparatuses or accessories that are not compatible with Apple's Magsafe technology (for example, for retaining apparatuses and accessories provided with a metal shell or insert through which the magnetic field lines extending between pairs of magnetic elements of opposite polarity in the sub-set are closed) and a second sub-set of magnetic elements M3 to make the device easier to open.

As shown in Fig. 6, the first portion 12 of the device includes a first arrangement of magnetic elements M1 having a same, first polarity (denoted by + in the figure), and the second portion 14 of the device includes a first symmetrical arrangement of magnetic elements M1 having a same, second polarity (denoted by - in the figure) opposite to said first polarity of the arrangement of magnetic elements M1 of the first portion.

The first portion 12 of the device further includes a second arrangement of magnetic elements (comprising the magnetic elements M2 and a part of the magnetic elements M3), each having a relevant polarity (denoted by + and - in the figure), and the second portion 14 of the device includes a second symmetrical arrangement of magnetic elements (comprising the magnetic elements M2 and a part of the magnetic elements M3), each having a relevant polarity coincident with the polarity of the symmetrically corresponding magnetic elements of the second arrangement of magnetic elements of the portion 12.

Finally, the first portion 12 includes at least a third magnetic element (belonging to the sub-set of magnetic elements M3) having a first polarity, and the second portion 14 includes at least a third magnetic element (belonging to the sub-set of magnetic elements M3) arranged symmetrically to the third magnetic element of the first portion, having a second polarity opposite to the first polarity of the third magnetic element of the first portion.

In the illustrative embodiment, in the configuration of minimum size, the magnetic elements M1 of the first portion 12 are adapted to attract the magnetic elements M1 of the second portion 14, the magnetic elements M2 of the first portion 12 are all repulsive toward the magnetic elements M2 of the second portion 14, and the magnetic elements M3 of the first portion 12 are all repulsive toward the magnetic elements M3 of the second portion 14 except for one. This combination of magnetic elements is designed to allow the device to remain magnetically closed, but at the same time to be opened by a user without the need to apply excessive force in the operation of separating the two portions shown in Fig. 4d. The number of the magnetic elements of the sub-set M3 respectively dedicated to generating an attractive force and a repulsive force may vary, depending on the weight supported by the hinge. For example, for a hinge capable of supporting a weight of 550g +/- 50g, only one attractive magnet is provided in the sub-set M3.

A person skilled in the art will understand that the functions of the sub-set of magnetic elements M2 and of the sub-set of magnetic elements M3 may be interchanged without departing from the principle of the invention.

In an advantageous embodiment of the invention, the supporting device includes a metal fixing plate 30 to secure the device magnetically to an area of a supporting structure. The fixing plate is able to be magnetically coupled to either the first portion 12 or to the second portion 14, and comprises a flat metal body having a first face 30a bearing an adhesive material designed to stably adhere to the supporting structure, regardless of the material constituting that structure, and an opposite second face 30b having at least one protruding alignment formation 32, such as a cylindrical pin.

The fixing plate allows the device to be applied to any type of surface and material of any supporting structure, although the first portion 12 of the device may be independently applied magnetically, in a removable manner, to any metal surface. A plurality of fixing plates joined to different (non-metallic) supporting structures allows the supporting device to be applied to each of them and the supporting device to be transferred between them smoothly and quickly.

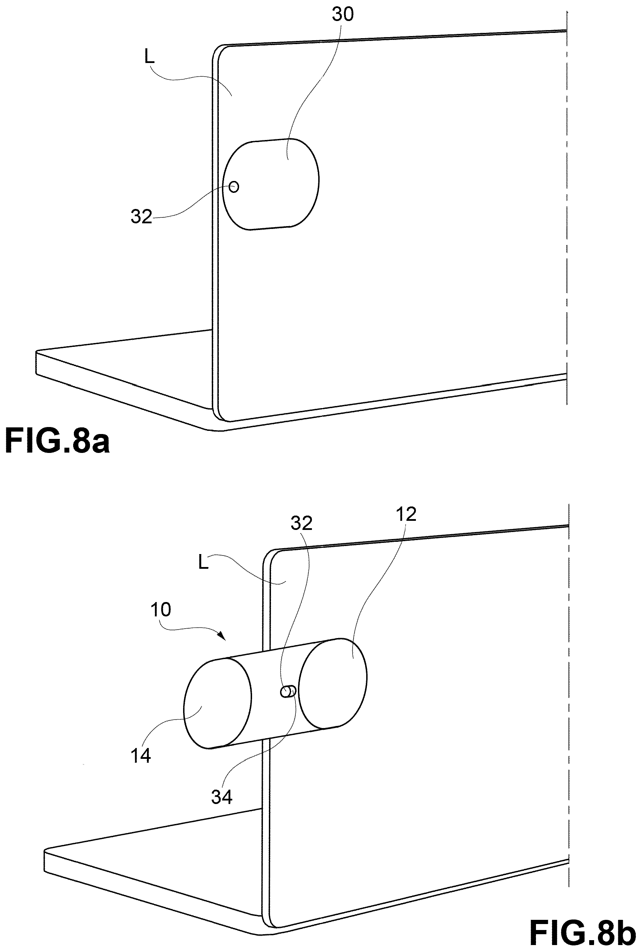

The first portion 12 of the device has an alignment hole 34, either through or blind, adapted to receive the protruding alignment formation 32 of the fixing plate 30 when the device is magnetically coupled via the first portion 12 to the fixing plate. This allows for the proper positioning of the device and prevents its rotation accidentally or due to the weight of the supported apparatus or accessory. Although not shown, the second portion may also provide a similar alignment hole. Advantageously, the alignment hole 34 has, along one of the two dimensions, and precisely along the axis of longitudinal symmetry of the device orthogonal to the hinge axis X, a greater extension with respect to the protruding formation 32, so as to allow additional freedom of adjustment in the positioning of the device, for example to accommodate the size of the apparatus to be supported in relation to the edge of a computer screen (as better shown in Fig. 8a-8d). Advantageously, an alignment through-hole may also be used as a feed-through hole for the wired power supply of apparatuses or accessories supported by the device, when the device is not engaged with a fixing plate.

Fig. 8a-8d shows a sequence of use of the supporting device that is the subject of the present invention.

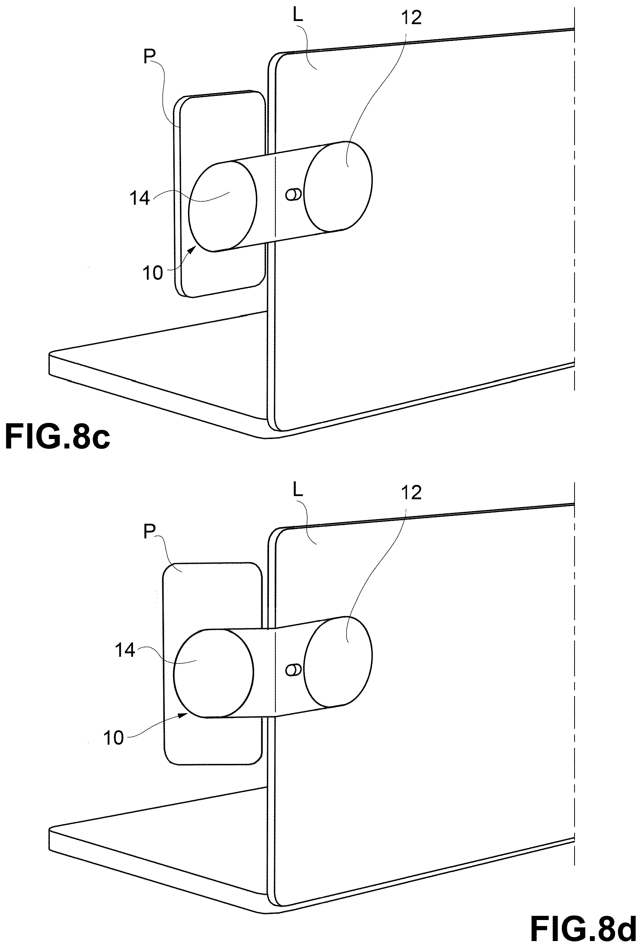

In Fig. 8a, a fixing plate 30 is stably coupled by means of adhesive to the rear surface of a display screen of a laptop L near one of its edges. The first portion 12 of a supporting device 10 in Fig. 8b is magnetically coupled thereto, to which device a smartphone P is temporarily secured, again by magnetic coupling (Fig. 8c). The smartphone P may be oriented with respect to the screen of the laptop L, in particular it may be tilted with respect to the plane of the screen of the laptop (Fig. 8d) by rotating the second portion 14 of the device with respect to the first portion 12 by acting on the hinge means 16. In this embodiment, by arranging the device horizontally, a smartphone may be paired laterally with a laptop screen, in a vertical orientation.

The supporting device may be applied to the fixing plate, and in general to a supporting structure, in the configuration of minimum size, whereby it may not protrude from the profile of the supporting structure, and is opened in the configuration of use as needed by rotating the second portion 14 in the half-space behind the supporting structure, such as by an angle of 180° or more as in the example case.

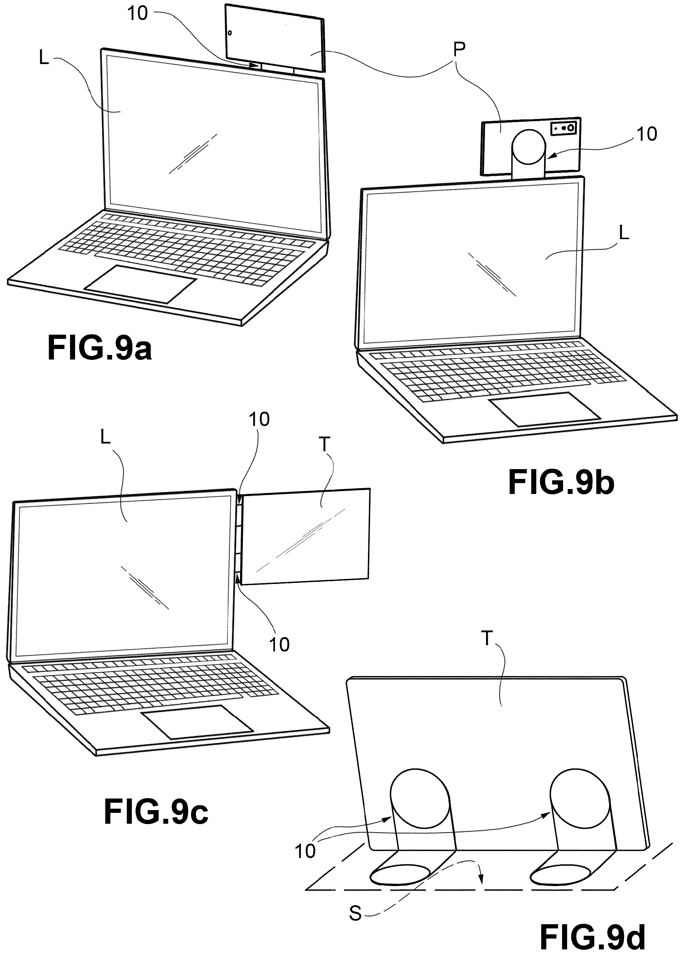

Fig. 9a-9d show other possible uses of the supporting device that is the subject of the present invention.

In particular, as shown in Fig. 9a, through the use of the fixing plate, the device may be oriented vertically with respect to the laptop screen, for example by simply coupling its first portion 12 to the fixing plate 30 according to an orientation rotated by 90° with respect to the example in Fig. 8b, switching the positioning of the mobile device from vertical (portrait) to horizontal (landscape) mode by employing a single supporting device, and simply rotating the portion 12 of the device on the plate 30. This allows a smartphone P coupled on top of the screen of a laptop to be supported in landscape orientation.

Due to the structure of the device and in particular the placement of the magnetic elements, an attractive force is exerted on both sides of the device, whereby a smartphone P may be supported by the device on the opposite side so that the rear camera faces the user of the laptop in the configuration in Fig. 9b. This configuration may also be achieved by applying the second portion 14 of the device to the fixing plate 30 and supporting the smartphone P by means of the first portion 12.

Fig. 9c shows another example of using the device, and in particular a pair of devices, to support a tablet T or similar apparatus of greater weight than a smartphone, in an otherwise stable condition.

Fig. 9d shows an alternative use of the device that is the subject of the invention as a support resting on a horizontal work surface S at an angle which is variable as desired, in this case without the need for an adhesive or magnetic coupling to that surface.

Other examples that are not depicted of applications of the device of the invention are the coupling of apparatuses or accessories to vertical supporting structures of all kinds, such as a wall, or to other similar or different supporting devices, such as a tripod, possibly by means of interconnecting accessories that provide a metal or magnetic surface compatible with the magnetic arrangements of the first or second portion 12, 14 of the device.

Advantageously, in order to ensure that an optimal inclination angle of an apparatus or an accessory with respect to the supporting structure with which it is associated may be achieved, the main body 30 of the second portion 14 has, near the hinge axis X, a region R of reduced thickness that defines a recess in the surface of the second portion facing away from the first portion in the configuration of minimum size. This recess runs along the entire transverse extension of the portion 14, i.e., along the entire hinge 16. In a configuration wherein the second portion 14 is rotated from the configuration of minimum size to an angle greater than 180° with respect to the first portion 12, this feature allows the second portion to reach a greater inclination angle with respect to the supporting structure to which the device 10 is applied before interference occurs between the second portion of the device and said structure. In the case, for example, of using the device for arranging a portable processing or telecommunication apparatus side by side with a computer display screen, this feature ensures that the second portion of the device may be freely rotated up to a maximum of 280 degrees with respect to the first portion. A person skilled in the art will understand that this feature may also be provided in the main body 30 of the first portion 12.

It should be noted that the proposed embodiment of this invention in the foregoing discussion is provided merely by way of example and not in limitation of the present invention. A person skilled in the art will easily be able to implement the present invention in different embodiments that do not, however, deviate from the principles outlined herein. This applies in particular to the possibility of applying the supporting device of the invention to other supporting structures not mentioned in this discussion, for the support of other apparatuses or accessories not mentioned in this discussion. Moreover, the supporting device of the invention may also be used independently or in combination with other similar supporting devices to make a modular system and create, for example, complex charging stations (e.g., to charge a smartphone, a pair of headphones, or a smartwatch in an orderly manner) or table lamps, possibly even with a wireless charging function for one or more apparatuses. In effect, the second portion of the device is adapted to magnetically couple to the first portion of a second, similar device to achieve more complex configurations of two or more devices, for example, articulated about multiple axes and with a greater number of magnetic support areas available to apparatuses and accessories.

Of course, without prejudice to the principle of the invention, the embodiments and the details of execution may vary widely with respect to that which has been described and illustrated purely by way of non-limiting example, without thereby departing from the scope of protection of the invention defined by the appended claims.

## Claims

1. Supporting device (10) for a portable processing and/or telecommunication apparatus (P; T) or an accessory, comprising a first portion (12) adapted to be supported by a supporting structure (L) and a second portion (14) having magnetic means (M1, M2, M3) for retaining said apparatus (P, T) or accessory, wherein the first and the second portion (12, 14) are joined together in a pivotable manner through hinge means (16) which allow the rotation of one portion with respect to the other around a hinge axis (X), whereby the supporting device (10) is adapted to take on a first configuration of minimum size, in which said second portion (14) is superimposed on the first portion (12), and at least a second configuration of use in which said second portion (14) is rotated at a selectable angle with respect to the first portion (12),
wherein said first portion (12) and said second portion (14) are hinged along portions (12'; 14') of a relevant edge that are mutually parallel and parallel to the hinge axis (X) so that the supporting device is configured to open like a book from the configuration of minimum size to the selected configuration of use,
**characterized in that** said first portion (12) and said second portion (14) are made as plate elements, each of which comprises a rigid main body (20), having a plurality of seats (H1; H2; H3) adapted to receive respective magnetic elements (M1; M2; M3), and a pair of covering elements (22) applied on opposite faces of the main body (20) at the magnetic elements (M1, M2, M3), not interfering with the magnetic field generated by said magnetic elements (M1, M2, M3).

2. Supporting device (10) according to claim 1, wherein said first and second portion (12, 14) respectively include a first and a second plurality of magnetic elements (M1, M2, M3) of equal number, said magnetic elements (M1, M2, M3) being symmetrically arranged with respect to the hinge axis (X) so that symmetrically corresponding magnetic elements (M1, M2, M3) of the first and the second portion (12, 14) are arranged facing each other in a configuration of minimum size of the device.

3. Supporting device (10) according to claim 2, wherein
said first portion (12) includes an arrangement of first magnetic elements (M1) having a same first polarity, and said second portion (14) includes a symmetrical arrangement of first magnetic elements (M1) having a same second polarity opposite to said first polarity of the arrangement of first magnetic elements (M1) of the first portion (12); and wherein
said first portion (12) includes an arrangement of second magnetic elements (M2; M3) each having a relevant polarity, and said second portion (14) includes a symmetrical arrangement of second magnetic elements (M2; M3) each having a relevant polarity coincident with the polarity of the symmetrically corresponding magnetic elements (M2; M3) of the arrangement of second magnetic elements (M2; M3) of the first portion (12).

4. Supporting device (10) according to claim 3, wherein the magnetic elements (M1) of said arrangements of first magnetic elements of the first and second portion (12, 14) of the supporting device are arranged circumferentially.

5. Supporting device (10) according to claim 3, wherein the magnetic elements (M2; M3) of said arrangements of second magnetic elements of the first and second portion (12, 14) of the supporting device are arranged in a checkerboard or quincunx pattern.

6. Supporting device (10) according to claim 2, wherein said first portion (12) includes at least a third magnetic element (M3) having a first polarity and said second portion (14) includes at least a third magnetic element (M3) arranged symmetrically to the third magnetic element (M3) of the first portion (12), having a second polarity opposite to said first polarity of the third magnetic element (M3) of the first portion (12).

7. Supporting device (10) according to any one of the preceding claims, wherein said first and second portion (12, 14) have a congruent shape, and portions (12", 14") of the relevant edge on the opposite side to the hinge (16) have corresponding notches (12A, 14A) intended to be facing each other in the configuration of minimum size of the device in such a way as to form a recess (18) adapted to facilitate the engagement of a finger (F) of a user.

8. Supporting device (10) according to any one of the preceding claims, including a plate (30) for fixing the device on an area of said supporting structure (L), which fixing plate is adapted to be magnetically couplable to said first or second portion (12, 14), comprising a flat metal body having a first face (30a) bearing an adhesive material designed to stably adhere to said supporting structure (L) and a second, opposite face (30b) bearing at least one protruding alignment formation (32).

9. Supporting device (10) according to claim 8, wherein said first portion (12) has an alignment hole (34) adapted to receive said protruding alignment formation (32) of the fixing plate (30) in a magnetic coupling configuration of the first portion (12) of the device with the fixing plate (30).

10. Supporting device (10) according to claim 1, wherein each covering element (22) comprises a first layer of rigid material adapted to stably adhere to the main body (20) of the relevant plate element and a second layer of soft material adapted to receive in contact said portable processing and/or telecommunication apparatus (P, T) or accessory.

11. Supporting device (10) according to claim 1 or 10, wherein the main body (20) of at least said second portion (14) in the proximity of the hinge axis (X) has a region (R) of reduced thickness which defines a recess in the surface of at least said second portion (14) facing away from the first portion (12) in the configuration of minimum size.

## Patentansprüche

1. Tragvorrichtung (10) für ein tragbares Bearbeitungs- und/oder Telekommunikationsgerät (P; T) oder ein Zubehörteil, umfassend einen ersten Abschnitt (12), der geeignet ist, von einer Tragstruktur (L) getragen zu werden, und einen zweiten Abschnitt (14), der magnetische Mittel (M1, M2, M3) zum Halten des genannten Geräts (P, T) oder Zubehörteils aufweist, wobei der erste und der zweite Abschnitt (12, 14) schwenkbar mittels Scharniermitteln (16) miteinander verbunden sind, die die Drehung eines Abschnitts relativ zum anderen um eine Scharnierachse (X) ermöglichen, wobei die Tragvorrichtung (10) geeignet ist, eine erste Konfiguration minimaler Größe einzunehmen, in der der genannte zweite Abschnitt (14) auf den ersten Abschnitt (12) aufgelegt ist, und wenigstens eine zweite Gebrauchskonfiguration, in der der genannte zweite Abschnitt (14) in einem auswählbaren Winkel relativ zum ersten Abschnitt (12) gedreht ist,
wobei der genannte erste Abschnitt (12) und der genannte zweite Abschnitt (14) entlang von Abschnitten (12'; 14') eines entsprechenden Randes gelenkig verbunden sind, die zueinander parallel und parallel zur Scharnierachse (X) sind, so dass die Tragvorrichtung so konfiguriert ist, dass sie sich wie ein Buch von der Konfiguration minimaler Größe zu der ausgewählten Gebrauchskonfiguration öffnen kann,
**dadurch gekennzeichnet, dass** der genannte erste Abschnitt (12) und der genannte zweite Abschnitt (14) als Plattenelemente ausgebildet sind, von denen jedes einen starren Hauptkörper (20) umfasst, der eine Vielzahl von Aufnahmen (H1; H2; H3) aufweist, die geeignet sind, jeweilige magnetische Elemente (M1, M2; M3) aufzunehmen, und ein Paar von Abdeckungselementen (22), die auf gegenüberliegenden Flächen des Hauptkörpers (20) bei den magnetischen Elementen (M1, M2, M3) angebracht sind und nicht mit dem von den genannten magnetischen Elementen (M1, M2, M3) erzeugten Magnetfeld interferieren.

2. Tragvorrichtung (10) nach Anspruch 1, wobei der genannte erste und der zweite Abschnitt (12, 14) jeweils eine erste und eine zweite Vielzahl von magnetischen Elementen (M1, M2, M3) gleicher Anzahl umfassen, wobei die genannten magnetischen Elemente (M1, M2, M3) symmetrisch in Bezug auf die Scharnierachse (X) angeordnet sind, so dass symmetrisch entsprechende magnetische Elemente (M1, M2, M3) des ersten und des zweiten Abschnitts (12, 14) in einer Konfiguration minimaler Größe der Vorrichtung einander gegenüberliegend angeordnet sind.

3. Tragvorrichtung (10) nach Anspruch 2, wobei
der genannte erste Abschnitt (12) eine Anordnung von ersten magnetischen Elementen (M1) umfasst, die eine gleiche erste Polarität aufweisen, und der genannte zweite Abschnitt (14) eine symmetrische Anordnung von ersten magnetischen Elementen (M1) umfasst, die eine gleiche zweite Polarität aufweisen, die der genannten ersten Polarität der Anordnung von ersten magnetischen Elementen (M1) des ersten Abschnitts (12) entgegengesetzt ist; und wobei
der genannte erste Abschnitt (12) eine Anordnung von zweiten magnetischen Elementen (M2; M3) umfasst, von denen jedes eine entsprechende Polarität aufweist, und der genannte zweite Abschnitt (14) eine symmetrische Anordnung von zweiten magnetischen Elementen (M2; M3) umfasst, von denen jedes eine entsprechende Polarität aufweist, die mit der Polarität der symmetrisch entsprechenden magnetischen Elemente (M2; M3) der Anordnung von zweiten magnetischen Elementen (M2; M3) des ersten Abschnitts (12) übereinstimmt.

4. Tragvorrichtung (10) nach Anspruch 3, wobei die magnetischen Elemente (M1) der genannten Anordnungen von ersten magnetischen Elementen des ersten und des zweiten Abschnitts (12, 14) der Tragvorrichtung umlaufend angeordnet sind.

5. Tragvorrichtung (10) nach Anspruch 3, wobei die magnetischen Elemente (M2; M3) der genannten Anordnungen von zweiten magnetischen Elementen des ersten und des zweiten Abschnitts (12, 14) der Tragvorrichtung in einem Schachbrett- oder Quincunx-Muster angeordnet sind.

6. Tragvorrichtung (10) nach Anspruch 2, wobei der genannte erste Abschnitt (12) wenigstens ein drittes magnetisches Element (M3) umfasst, das eine erste Polarität aufweist, und der genannte zweite Abschnitt (14) wenigstens ein drittes magnetisches Element (M3) umfasst, das symmetrisch zu dem dritten magnetischen Element (M3) des ersten Abschnitts (12) angeordnet ist und eine zweite Polarität aufweist, die der genannten ersten Polarität des dritten magnetischen Elements (M3) des ersten Abschnitts (12) entgegengesetzt ist.

7. Tragvorrichtung (10) nach einem der vorhergehenden Ansprüche, wobei der genannte erste und der zweite Abschnitt (12, 14) eine kongruente Form aufweisen, und Abschnitte (12", 14") des entsprechenden Randes auf der dem Scharnier (16) gegenüberliegenden Seite entsprechende Ausnehmungen (12A, 14A) aufweisen, die dazu bestimmt sind, in der Konfiguration minimaler Größe der Vorrichtung einander gegenüberzustehen, so dass eine Ausnehmung (18) gebildet wird, die geeignet ist, das Eingreifen eines Fingers (F) eines Benutzers zu erleichtern.

8. Tragvorrichtung (10) nach einem der vorhergehenden Ansprüche, umfassend eine Platte (30) zum Befestigen der Vorrichtung auf einem Bereich der genannten Tragstruktur (L), welche Befestigungsplatte geeignet ist, magnetisch mit dem genannten ersten oder zweiten Abschnitt (12, 14) koppelbar zu sein, umfassend einen flachen Metallkörper mit einer ersten Fläche (30a), die ein Klebematerial trägt, das dazu ausgelegt ist, stabil an der genannten Tragstruktur (L) zu haften, und einer zweiten, gegenüberliegenden Fläche (30b), die wenigstens eine vorspringende Ausrichtungsformation (32) trägt.

9. Tragvorrichtung (10) nach Anspruch 8, wobei der genannte erste Abschnitt (12) eine Ausrichtungsöffnung (34) aufweist, die geeignet ist, die genannte vorspringende Ausrichtungsformation (32) der Befestigungsplatte (30) in einer magnetischen Kopplungskonfiguration des ersten Abschnitts (12) der Vorrichtung mit der Befestigungsplatte (30) aufzunehmen.

10. Tragvorrichtung (10) nach Anspruch 1, wobei jedes Abdeckungselement (22) eine erste Schicht aus starrem Material umfasst, die geeignet ist, stabil an dem Hauptkörper (20) des entsprechenden Plattenelements zu haften, und eine zweite Schicht aus weichem Material, die geeignet ist, das genannte tragbare Bearbeitungs- und/oder Telekommunikationsgerät (P, T) oder das Zubehörteil in Kontakt aufzunehmen.

11. Tragvorrichtung (10) nach Anspruch 1 oder 10, wobei der Hauptkörper (20) von wenigstens dem genannten zweiten Abschnitt (14) in der Nähe der Scharnierachse (X) einen Bereich (R) verringerter Dicke aufweist, der eine Ausnehmung in der Oberfläche von wenigstens dem genannten zweiten Abschnitt (14) definiert, die in der Konfiguration minimaler Größe von dem ersten Abschnitt (12) weg gerichtet ist.

## Revendications

1. Dispositif de support (10) pour un appareil de traitement portable et/ou de télécommunication (P; T) ou un accessoire, comprenant une première portion (12) adaptée à être supportée par une structure de support (L) et une seconde portion (14) ayant des moyens magnétiques (M1, M2, M3) pour retenir ledit appareil (P, T) ou accessoire, dans lequel la première et la seconde portion (12, 14) sont jointes ensemble de manière pivotante au moyen de moyens de charnière (16) qui permettent la rotation d'une portion par rapport à l'autre autour d'un axe de charnière (X), de sorte que le dispositif de support (10) est adapté à adopter une première configuration de taille minimale, dans laquelle ladite seconde portion (14) est superposée à la première portion (12), et au moins une seconde configuration d'utilisation dans laquelle ladite seconde portion (14) est tournée à un angle sélectionnable par rapport à la première portion (12),
dans lequel ladite première portion (12) et ladite seconde portion (14) sont articulées le long de portions (12'; 14') d'un bord correspondant qui sont mutuellement parallèles et parallèles à l'axe de charnière (X) de sorte que le dispositif de support est configuré pour s'ouvrir comme un livre depuis la configuration de taille minimale jusqu'à la configuration d'utilisation sélectionnée,
**caractérisé en ce que** ladite première portion (12) et ladite seconde portion (14) sont réalisées comme des éléments de plaque, chacun comprenant un corps principal rigide (20), ayant une pluralité de logements (H1; H2; H3) adaptés à recevoir des éléments magnétiques respectifs (M1; M2; M3), et une paire d'éléments de recouvrement (22) appliqués sur des faces opposées du corps principal (20) au niveau des éléments magnétiques (M1, M2, M3), n'interférant pas avec le champ magnétique généré par lesdits éléments magnétiques (M1, M2, M3).

2. Dispositif de support (10) selon la revendication 1, dans lequel ladite première et ladite seconde portion (12, 14) comprennent respectivement une première et une seconde pluralité d'éléments magnétiques (M1, M2, M3) en nombre égal, lesdits éléments magnétiques (M1, M2, M3) étant disposés symétriquement par rapport à l'axe de charnière (X) de sorte que des éléments magnétiques correspondants symétriquement (M1, M2, M3) de la première et de la seconde portion (12, 14) sont disposés face à face dans une configuration de taille minimale du dispositif.

3. Dispositif de support (10) selon la revendication 2, dans lequel
ladite première portion (12) comprend un agencement de premiers éléments magnétiques (M1) ayant une même première polarité, et ladite seconde portion (14) comprend un agencement symétrique de premiers éléments magnétiques (M1) ayant une même seconde polarité opposée à ladite première polarité de l'agencement de premiers éléments magnétiques (M1) de la première portion (12); et dans lequel
ladite première portion (12) comprend un agencement de seconds éléments magnétiques (M2; M3) ayant chacun une polarité correspondante, et ladite seconde portion (14) comprend un agencement symétrique de seconds éléments magnétiques (M2; M3) ayant chacun une polarité correspondante coïncidant avec la polarité des éléments magnétiques correspondants symétriquement (M2; M3) de l'agencement de seconds éléments magnétiques (M2; M3) de la première portion (12).

4. Dispositif de support (10) selon la revendication 3, dans lequel les éléments magnétiques (M1) desdits agencements de premiers éléments magnétiques de la première et de la seconde portion (12, 14) du dispositif de support sont disposés circonférentiellement.

5. Dispositif de support (10) selon la revendication 3, dans lequel les éléments magnétiques (M2; M3) desdits agencements de seconds éléments magnétiques de la première et de la seconde portion (12, 14) du dispositif de support sont disposés selon un motif en damier ou en quinconce.

6. Dispositif de support (10) selon la revendication 2, dans lequel ladite première portion (12) comprend au moins un troisième élément magnétique (M3) ayant une première polarité et ladite seconde portion (14) comprend au moins un troisième élément magnétique (M3) disposé symétriquement par rapport au troisième élément magnétique (M3) de la première portion (12), ayant une seconde polarité opposée à ladite première polarité du troisième élément magnétique (M3) de la première portion (12).

7. Dispositif de support (10) selon l'une quelconque des revendications précédentes, dans lequel ladite première et ladite seconde portion (12, 14) ont une forme congruente, et des portions (12", 14") du bord correspondant du côté opposé à la charnière (16) présentent des encoches correspondantes (12A, 14A) destinées à être en regard l'une de l'autre dans la configuration de taille minimale du dispositif de manière à former un logement (18) adapté à faciliter l'engagement d'un doigt (F) d'un utilisateur.

8. Dispositif de support (10) selon l'une quelconque des revendications précédentes, comprenant une plaque (30) pour fixer le dispositif sur une zone de ladite structure de support (L), laquelle plaque de fixation est adaptée à être couplable magnétiquement à ladite première ou seconde portion (12, 14), comprenant un corps métallique plat ayant une première face (30a) portant un matériau adhésif conçu pour adhérer de manière stable à ladite structure de support (L) et une seconde face opposée (30b) portant au moins une formation de centrage en saillie (32).

9. Dispositif de support (10) selon la revendication 8, dans lequel ladite première portion (12) présente un trou de centrage (34) adapté à recevoir ladite formation de centrage en saillie (32) de la plaque de fixation (30) dans une configuration de couplage magnétique de la première portion (12) du dispositif avec la plaque de fixation (30).

10. Dispositif de support (10) selon la revendication 1, dans lequel chaque élément de recouvrement (22) comprend une première couche de matériau rigide adaptée à adhérer de manière stable au corps principal (20) de l'élément de plaque correspondant et une seconde couche de matériau souple adaptée à recevoir en contact ledit appareil de traitement portable et/ou de télécommunication (P, T) ou accessoire.

11. Dispositif de support (10) selon la revendication 1 ou 10, dans lequel le corps principal (20) d'au moins ladite seconde portion (14) à proximité de l'axe de charnière (X) présente une région (R) d'épaisseur réduite qui définit un logement dans la surface d'au moins ladite seconde portion (14) tournée à l'opposé de la première portion (12) dans la configuration de taille minimale.
